(19) Europäisches Patentamt
European Patent Office
Office européen des brevets

(11) Publication number: **0 222 597 B1**

(12) **EUROPEAN PATENT SPECIFICATION**

(45) Date of publication of patent specification: **02.01.92**

(51) Int. Cl.5: **C01B 33/34**, C01B 33/20

(21) Application number: **86308654.2**

(22) Date of filing: **06.11.86**

(54) **Layered silicate.**

(30) Priority: **12.11.85 US 797084**
**12.11.85 US 797276**

(43) Date of publication of application:
**20.05.87 Bulletin 87/21**

(45) Publication of the grant of the patent:
**02.01.92 Bulletin 92/01**

(84) Designated Contracting States:
**BE DE FR GB IT NL SE**

(56) References cited:

**No relevant documents have been disclosed**

(73) Proprietor: **MOBIL OIL CORPORATION**
**150 East 42nd Street**
**New York New York 10017(US)**

(72) Inventor: **Kuehl, Guenter Hinrich**
**1956 Cardinal Lake Drive**
**Cherry Hill New Jersey 08003(US)**
Inventor: **Landis, Michael Eugene**
**26 N. Horace Street**
**Woodbury New Jersey 08096(US)**
Inventor: **Chu, Pochen**
**1173 Ollerton Road**
**West Deptford New Jersey 08066(US)**

(74) Representative: **Cooper, John Anthony et al**
**Mobil Court 3 Clements Inn**
**London WC2A 2EB(GB)**

EP 0 222 597 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a layered silicate or metallosilicate, to its synthesis and to a pillared derivative thereof.

The fundamental unit of crystalline silicate structures is a tetrahedral complex consisting of a silicon atom in tetrahedral coordination with four oxygen atoms. In some structures, the tetrahedra link to form chains which result in fibrous or needlelike morphologies. Single chains result when $SiO_4$ tetrahedra are joined at two oxygen atoms.

In other silicate structures, the tetrahedra are linked in layers or sheets as in mica minerals. Similar arrangements of the tetrahedra are found in clay minerals wherein two types of sheets may exist, one consisting of aluminum, iron or magnesium ions in a six-fold coordination with oxygens. The layer or sheet structures result from linking between three corners of each tetrahedron to neighboring tetrahedra. Breck, Zeolite Molecular Sieves, John Wiley & Sons, A Wiley Interscience, Publication New York, London, Sydney, Toronto, p. 31 (1974) reports that these layer or sheet structures do not have three-dimensional stability and may expand if the layers are forced apart by water, other molecules or ions, and thus, differ from the silicates referred to as zeolites. By way of comparison in the family of materials referred to as zeolites, the $SiO_4$ tetrahedra are linked in three dimensions by a mutual sharing of all of the oxygen atoms; and thus the family of zeolites is characterized by a resulting three dimensional framework structure.

The difference in the crystallographic order of layered silicates compared to zeolites leads to other differences, for example, differences in sorptive capacities, surface area and relative stability. Thus it is possible to, e.g. increase, the sorptive capacities, surface area and stability of layered silicates by the technique known as pillaring. In this respect, the terms "pillar" and "pillaring", mean insertion of a material between the layers of the layered silicate substrate (Cf. Loeppert, Jr. et al, Clays and Clay Minerals 27(3), 201-208 [1979]).

In one aspect, the invention resides in a layered silicate or metallosilicate designated MCM-20 and having, in the as synthesized form, an X-ray diffraction pattern with the characteristic lines listed in Table 1 below:

Table 1

| d, Å | I |
|---|---|
| 21.0±4.0 | M - VS |
| 5.14±0.15 | W |
| 4.90±0.15 | W |
| 4.40±0.15 | W |
| 3.96±0.1 | W - M |
| 3.71±0.1 | M |
| 3.55±0.1 | VS |
| 3.36±0.08 | S - VS |
| 3.19±0.08 | W - M |
| 1.85±0.03 | M |

In a further aspect, the invention resides in a method of producing the layered silicate or metallosilicate MCM-20 by crystallization of a reaction mixture containing water, a source of an oxide of silicon, a source of hydroxyl ions, optionally a source of metal oxide and further containing a source of a cation of the formula R wherein R is

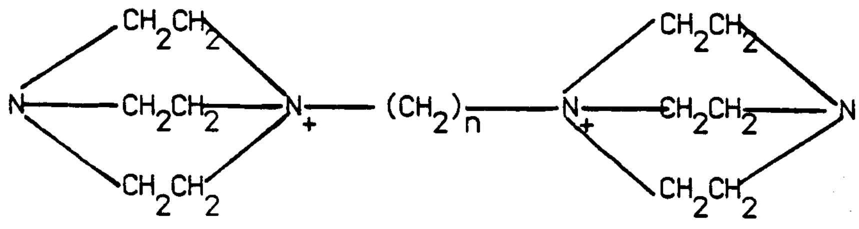

n being 4 or 5, and the ranges of mole ratios of components of the reaction mixture are:

$SiO_2/Al_2O_3$ 100 - ∞
$H_2O/(RO + M_2O)$ 50 - 250
$OH^-/SiO_2$ 0.05 - 0.50
$RO/(RO + M_2O)$ 0.30 - 0.90
wherein M is an alkali metal.

In yet a further aspect, the invention resides in a pillared silicate or metallosilicate formed from a layered silicate or metallosilicate which exhibits an X-ray diffraction pattern having the characteristic lines given in Table I; and pillars of at least one oxide of an element from group IB, IIB, IIIA, IIIB, IVA, IVB, VA, VB, VIA, VIIA and VIIIA of the Periodic Table interposed between layers of said layered silicate to separate and support said layers.

In still yet a further aspect, the invention resides in a method of preparing a pillared silicate composition comprising:

a) providing a layered silicate or metallosilicate which exhibits an X-ray diffraction pattern of Table 1 of the specification; and enhancing the interlayer distance of layers of said layered silicate or metallosilicate by impregnation with an organic compound capable of forming a cationic species;

b) introducing between the layers of said impregnated layered silicate or metallosilicate a compound capable of conversion to said oxide and converting said compound to said oxide.

The layered silicate of the invention may contain aluminum and preferably obeys the following formula in the as-crystallized form, in terms of mole ratios of oxides in the anhydrous state,

$$(3.5 \text{ to } 6.0)\ RO \cdot (0 \text{ to } 1)M_{2/m}O \cdot Al_2O_3 \cdot (100 \text{ to } 5000)SiO_2$$

wherein M is at least one cation having a valence n and R, being divalent, is a cation derived from the diazabicyclo[2.2.2]octane adduct of an α, ω -dihaloalkane. The alumina content is less than about 2%. As will be seen below, calcination of the as-synthesized silicate produces a phase change which is reflected by differences in the X-ray powder diffraction pattern of the as-synthesized silicate compared to the X-ray pattern of the calcined silicate. This phase change suggests that the silicate is a layered silicate.

The layered silicate may be prepared by crystallization from a reaction mixture containing a source of silica, a source of aluminum oxide, an alkali hydroxide and an organic salt which is the adduct of the reaction between diazabicyclo [2.2.2] octane and α, ω -dihaloalkane, preferably is a α, ω -dibromoalkane.

More particularly, the organic salt is the product of the reaction of one molecule of α, ω -dihalo-n-alkane with two molecules of diazabicyclo[2.2.2]octane (DABCO) in which only one of each of the two DABCO nitrogen atoms is quaternized, preferably such that the salt is of the formula:

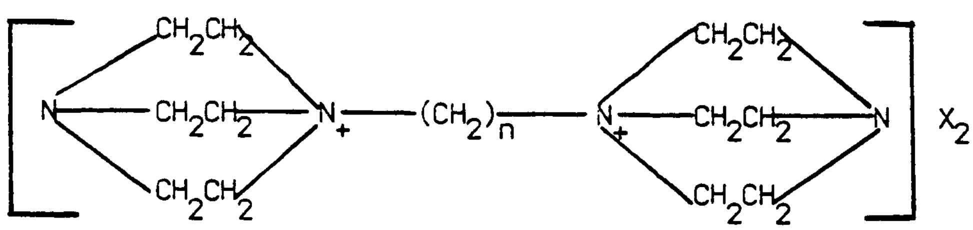

where n = 4 or 5 and X is fluorine, chlorine, bromine or iodine, preferably bromine. The organic salt is produced by reacting DABCO with the α, ω -dibromoalkane in a molar ratio of about 2:1, in a solvent therefor. Isolation of the resulting adduct may be by way of conventional extraction. Preferably, the synthesis of the halogen salt of DABCO-$C_n$ diquat is conducted with constant stirring in methanol at a temperature of 45°-55°C in the manner described in detail by T.P. Abbiss and F.G. Mann in "Triethylenediamine (1,4 Diazabicyclo[2,2,2]octane) and Hexaethylenetetramine. Part IV. The Interaction of Triethlyenediamine and Dibromomethane, 1,2-Dibromoethane, and 1,3-Dibromopropane," JOURNAL OF THE CHEMICAL SOCIETY, published by Chemical Society (London, 1964), pp 2248-2254. If desired, the halogen salt can be converted to the hydroxide form of the DABCO-$C_n$-diquat in any conventional manner.

Preferably, the reaction mixture from which the layered silicate of the invention is crystallized has the following composition, in terms of mole ratios, within the following ranges:

| | Broad | Preferred |
|---|---|---|
| $SiO_2/Al_2O_3$ | 100 - ∞ | 140 - 5000 |
| $H_2O/(RO+M_2O)$ | 50 - 250 | 80 - 150 |
| $OH^-/SiO_2$ | 0.05 - 0.50 | 0.1 - 0.40 |
| $RO/(RO+M_2O)$ | 0.30 - 0.90 | 0.40 - 0.80 |

wherein R is the cationic form of the organic salt and M is an alkali metal ion. It is noted that the $SiO_2/Al_2O_3$ mole ratio for the reaction mixture of the present invention can vary over a wide range with an essentially unlimited upper end. It can be infinity or as reasonably close thereto as possible. The reaction mixture is maintained at crystallization conditions until the crystals of silicate are formed.

The reaction mixture can be prepared utilizing any suitable materials which can supply the appropriate oxides. Such compositions include aluminates, alumina, silicates, silica hydrosol, silica gel, silicic acid and hydroxides. It will be understood that each oxide component utilized in the reaction mixture can be supplied by one or more reactants and the reactants can be mixed together in any order. For example, any oxide can be supplied as an aqueous solution, e.g., alkali ion as potassium or sodium hydroxide, or a suitable silicate, aluminate, or other salt.

Crystallization is conveniently effected at a temperature ranging from 120°C to 225°C, preferably from 140°C to 200°C, and at autogenous pressure. The pH of the reaction mixture preferably ranges from 13.5 to 10.0. Crystallization time depends on temperature employed but generally ranges from 3 to 25 days, more preferably from 5 to 18 days.

Digestion of the reaction mixture is carried out until the crystallization is complete. The solid product is then separated from the reaction medium by filtration, after cooling to room temperature.

The resultant layered silicate in its as-synthesized, but dried form exhibits a characteristic X-ray diffraction pattern, the significant lines of which are listed in Table 1. Some variation in the X-ray diffraction pattern is, however, apparent between the silicate formed from the DABCO-$C_5$-diquat bromide (designated MCM-20A) and the silicate formed from the DABCO-$C_4$-diquat bromide (designated MCM-20B), although the two silicates are believed to have the same structure. The significant lines of these diffraction patterns are shown in Table II below.

Table II

| MCM-20A | | MCM-20B | |
|---|---|---|---|
| d,Å | I | d,Å | I |
| 19.9±0.5 | VS | 21.0±4.0 | M-VS |
| 5.18±0.1 | W | 5.09±0.1 | W |
| 4.95±0.1 | W | 4.85±0.1 | W |
| 4.33±0.08 | W | 4.48±0.08 | W |
| 3.96±0.08 | W-M | 3.95±0.08 | W |
| 3.70±0.07 | W-M | 3.70±0.07 | W-M |
| 3.58±0.07 | VS | 3.53±0.07 | M-VS |
| 3.37±0.07 | VS | 3.36±0.07 | M-VS |
| 3.17±0.06 | W | 3.20±0.06 | M |
| 1.855±0.02 | M | 1.85±0.02 | M-S |

After calcination at 300-550°C, the X-ray diffraction pattern changes considerably, reflecting a phase change and loss of the organic nitrogen cation so that the significant lines are as shown in Table III below:

Table III

| MCM-20A | | MCM-20B | |
|---|---|---|---|
| d,Å | I | d,Å | I |
| 13.1±0.2 | W-M | 12.9±0.2 | W-M |
| 7.40±0.1 | W | 7.36±0.1 | W |
| 6.88±0.1 | W | 6.87±0.1 | W |
| 6.49±0.1 | W | 6.4 | W |
| 6.05±0.1 | W | 6.0 | W |
| 5.30±0.1 | W | | |
| 4.55±0.08 | W | | |
| 4.09±0.08 | W | | |
| 3.69±0.07 | W | 3.76±0.07 | W |
| 3.43±0.07 | VS | 3.41±0.07 | VS |
| 1.856±0.02 | W | 1.857±0.02 | W |

The phase change on calcination is gradual and coincides with the loss of the organic nitrogen compound.

These X-ray diffraction data given in Tables I, II and III were collected with the Philips APD-3600 X-ray system, using copper K-alpha radiation. The positions of the peaks, expressed in degrees 2 theta, where theta is the Bragg angle, were determined by step-scanning at 0.02 degrees of 2 theta intervals and a counting time of 2 seconds for each step. The interplanar spacings, d, measured in Angstrom units (Å), and the relative intensities of the lines, $I/I_o$, where $I_o$ is the intensity of the strongest line, including subtraction of the background, were derived with the use of the software "APD Peak Algorithm". The relative intensities are given in terms of the symbols vs = very strong, s = strong, m = medium and w = weak. The silicate compositions of the present invention may exhibit minor variations from the X-ray diffraction pattern in each of the Tables, for example, some minor shifts in interplanar spacing and minor variation in relative intensity. Such minor variations can occur, depending on the silica to alumina ratio and the identity of cations present.

The as-synthesized precalcined silicate or its calcined product can have the original inorganic cations associated therewith replaced by a wide variety of other cations according to techniques well known in the art. It has not been established whether the organic cations can be removed efficiently from the as-synthesized form by ion-exchange. In any case, the silicate is expected to be more selective for the organic than for the replacing cation. Typical replacing cations include hydrogen, ammonium and metal cations including mixtures thereof. Of the replacing metallic cations, particular preference is given to cations of metals such as rare earths, Mn, Ca, Mg, Zn, Rh, Pd, Pt, Ni, Cu, Ti, Al, Sn, Fe and Co.

A typical ion exchange technique would be to contact the synthetic silicate with an aqueous solution of a salt of the desired replacing cation or cations. Although a wide variety of salts can be employed, particular preference is given to chlorides, nitrates, sulfates and acetates.

Representative ion exchange techniques are disclosed in a wide variety of patents including U.S. Patents 3,140,249, 3,140,251 and 3,140,253.

Following contact with the salt solution of the desired replacing cation, the synthetic silicate is then preferably washed with water and dried at a temperature ranging from 65°C to 200°C and thereafter may be calcined in air or an inert gas at temperatures ranging from 200°C to 600°C for periods of time ranging from 1 to 48 hours or more.

The novel silicate is distinct from known clay and zeolitic materials. Its high $SiO_2/Al_2O_3$ ratio should make it more hydrophobic than clay. The calcined material has a high surface area and exhibits hydrocarbon sorptive properties. These properties should make the new silicate more versatile than clay as a catalyst carrier. Its measured alpha value suggests its efficacy as a catalyst. Preliminary results indicate that the calcined form of the novel silicate exhibits catalytic activity for such hydrocarbon conversion reactions as dodecane cracking, aromatization of methylcyclohexane, oligomerization of propylene and isomerization of trans-butene and xylene. Conditions in such hydrocarbon conversions can include pressure ranging from 7000-21000 kPa (1000 - 3000 psig), temperatures ranging from 260-482°C, LHSV from 0.1 to 5 and where applicable, hydrogen gas flow rates of 178 to 3560 Nm3/$m^3$ (1000 to 20,000 scf/bbl).

The layered silicate of the invention can also be converted into a pillared material in which the layers of the silicate are physically separated by stable oxide pillars. The pillars are formed from oxides of one or more elements from Groups IB, IIB, IIIA, IIIB, IVA, IVB, VA, VB, VIA, VIIA and VIIIA of the Periodic Table

and preferably are formed of or contain silica. The resultant pillared materials are capable of being exposed to severe conditions such as those encountered in calcining without significant decrease in interlayer distance.

The extent of interlayer separation in the pillared material can be estimated by using standard techniques such as X-ray diffraction to determine the basal spacing, also known as "repeat distance" or "d-spacing". These values indicate the distance between, for example, the uppermost margin of one layer with the uppermost margin of its adjoining layer. If the layer thickness is known, the interlayer spacing can be determined by subtracting the layer thickness from the basal spacing.

The pillared silicate is preferably produced by impregnating the uncalcined layered silicate substrate with a reactant which is hydrolyzable to form the required supporting metal oxide pillars, although such impregnation may require initial swelling of the layered silicate. Swelling may be achieved by treating the layered silicate an organic compound capable of forming a cationic species between and separating the layers and preferably with primary aliphatic amine $RNH_2$ wherein R is a hydrocarbon group preferably of 3 to 15 carbon atoms or with a mixture of $RNH_2$ and a polar solvent for said $RNH_2$. Swelling may be conducted at ambient conditions of temperature and pressure, for periods of time ranging from 1 hour to 24 hours, although elevated temperatures up to 100 °C accelerate the swelling stage. The foregoing swelling treatment results in the formation of a layered silicate of enhanced interlayer separation depending upon the size of the organic cation introduced via said aliphatic amine. In one embodiment, a series of said swelling stages can be carried out. For example, the organic cation introduced via said aliphatic amine may be exchanged with another organic cation of greater size, thus increasing the interlayer separation in a step-wise fashion.

The amount of alkylamine used is not critical, but results appear to indicate that a mole ratio of nitrogen (N) of the amine to Si (of the layered silicate) of 0.5 to 1 is optimal. Swelling with the alkylamine may be conducted on the uncalcined "as-synthesized" layered silicate although preferably after the uncalcined "as-synthesized" layered silicate is subjected to a pre-treatment, for example with an acid solution to remove at least part organic material from the "as-synthesized" layered silicate.

Polar solvents suitable for use in combination with the alkylamine to effect swelling include water; alcohols, such as methanol, ethanol, propanol, and the like; ketones such as acetone and methylethylketone; methylene chloride, dimethylsulfoxide, dimethylformamide and hexamethylphosphoramide.

The swollen layered silicate is then treated with a pillaring agent, which is preferably hydrolyzable to form the required oxide pillars, and which is preferably electrically neutral so that the amount of material incorporated within the layered silicate is not dependent upon the charge density of the original layered silicate. For example, the pillaring agent may be one or more compounds of Si, Al, Fe, Cr, B, Ca, Ga and Mg, and preferably is a compound of Si and or Al. Aluminum compounds can be selected from those including $AlX_3$ (wherein X is halide and preferably is chlorine or bromine); $AlR_3$ (wherein R is a straight or branched chain alkyl group of 1-10 carbon atoms; $Al(OR)_3$ (wherein R is a straight or branched chain alkyl group of 1 to 10 carbon atoms straight or branched chain), such as aluminum isopropoxide. Silicon compounds can be $SiX_4$ (wherein X is halide and preferably is chlorine or bromine) siloxanes and tetraalkylorthosilicates. The tetraalkylorthosilicate may be referred as $(RO)_4Si$ wherein R is an alkyl group preferably of 1 to 8 carbon atoms, although the exact nature of R is not critical per se except insofar as the compound $(RO)_4Si$ should be hydrolyzable, to hydrolysis products such as $SiO_2$, and should be capable of penetrating the layered silicate. For health reasons, it is preferred not to employ the $(RO)_4Si$ in which R is methyl. Thus $(RO)_4Si$ impregnation of the layered silicate is accompanied by or followed by hydrolysis of the $(RO)_4Si$ compound. For example, when the $(RO)_4Si$ impregnation is undertaken subsequent to acid treatment and alkyl amine impregnation, hydrolysis of $(RO)_4Si$ occurs to produce $SiO_2$ and/or hydrolysis derivatives of $(RO)_4Si$. Parenthetically, hydrolysis of the $(RO)_4Si$ also results in the production of the corresponding alcohol. The amount of $(RO)_4Si$ used should be sufficient to maintain the spacing between the layers of the swollen layered silicate, but should be insufficient to plug the interlayer spaces of the silicate. This treatment with a pillaring agent may be undertaken at ambient conditions of temperature and pressure.

The resultant pillared silicate or its calcined product can have the original inorganic cations associated therewith replaced by a wide variety of other cations using ion exchange techniques well known in the art. Typical replacing cations include hydrogen, ammonium and metal cations including mixtures thereof. Of the replacing metallic cations, particular preference is given to cations of metals such as rare earths, Mn, Ca, Mg, Zn, Rh, Pd, Pt, Ni, Cu, Ti, Al, Sn, Fe and Co. Thus, for example, the uncalcined pillared layered silicate may treated with a source of aluminum ions to increase the aluminum content thereof, as reflected by an increase in alpha value. Subsequent calcination of the aluminum-exchanged product, typically at about 540 °C, would then be followed by further treatment with a source of aluminum ions and recalcination.

After calcination, the pillared silicate of the invention exhibits a high surface area, e.g., greater than 200, 300, or even 400 $m^2/g$, and thermal stability making it potentially useful as a catalyst or catalyst support for hydrocarbon conversion processes. Typical processes include:

(1) alkylation of benzene with ethylene or ethanol, and alkylation of toluene with methanol.
(2) disproportioning of toluene to produce para xylene
(3) cracking and hydrocracking
(4) isomerization of n-paraffins and naphthenes
(5) reforming
(6) isomerization of substituted polyalkyl aromatics
(7) disproportioning of aromatics
(8) conversion of dimethylether and/or methanol or other low molecular weight alcohols into hydrocarbons
(9) polymerization of compounds which contain olefin or acetylene bonds
(10) conversion of aliphatic carbonyl compounds into at least partly aromatic hydrocarbons
(11) separation of ethylbenzene from other aromatic C8 hydrocarbons
(12) hydrogenation and dehydrogenation of hydrocarbons
(13) methanation
(14) oxidation
(15) dehydration of aliphatic compounds containing oxygen
(16) conversion of olefins into compounds of high octane number.

Conditions in such processes will vary widely according to the process involved but generally the conditions will include a pressure ranging from 7000-21000 kPa (1000 - 3000 psig), temperature ranging from 260-482 °C, LSV from 0.1 to 5 and hydrogen gas flow rates of 1000 to 20,000 scf/bbl.

When used as a catalyst or catalyst support, the layered or pillared silicate of the invention may desirably be combined with a binder or matrix material resistant to the temperatures and other conditions employed in organic conversion processes. Such matrix materials include active and inactive materials, including synthetic or naturally occuring zeolites as well as other inorganic materials such as clays, silica and/or metal oxides, e.g., alumina. The latter may be either naturally occuring or in the form of gelatinous precipitates, sols or gels including mixtures of silica and metal oxides. Use of a material in conjuction with the new silicate, i.e., combined therewith, which is active, may enhance the conversion and/or selectivity of a catalyst including the silicate in certain organic conversion processes. Inactive materials suitably serve as diluents to control the amount of conversion in a given process. Frequently, crystalline silicate materials have been incorporated with naturally occurring clays, e.g., bentonite and kaolin. These materials, i.e., clays, oxides, etc., function, in part, as binders for the catalyst. It is desirable to provide a catalyst having good crush strengh, because in a petroleum refinery the catalyst is often subjected to rough handling, which tends to break the catalyst down into powder-like materials which cause problems in processing.

Naturally occurring clays which can be composited with the hereby synthesized silicate include the montmorillonite and kaolin families which include the subbentonites, and the kaolins commonly known as Dixie, McNamee, Georgia and Florida clays, or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the silicate hereby synthesized can be composited with a porous matrix material such as a silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The matrix can be in the form of a cogel. A mixture of these components could also be used. The relative proportions of finely divided crystalline silicate and inorganic oxide gel matrix vary widely with the crystalline silicate content ranging from 1 to 90 percent by weight, and more usually in the range of 2 to 50 percent by weight of the composite.

In order to more fully illustrate the nature of the invention and the manner of practicing same, the following examples are presented. In the examples, whenever adsorption data are set forth for comparison of sorptive capacities for water, cyclohexane and n-hexane, they were determined as follows.

A weighed sample of the calcined adsorbant was contacted with the desired pure adsorbate vapor in an adsorption chamber, evacuated to 133Pa (1 mm Hg) and contacted with 1.6kPa (12 mm Hg) of water vapor or 5.3kPa (40 mm Hg) of n-hexane, or cyclohexane vapor, pressures less than the vapor-liquid equilibrium pressure of the respective adsorbate at room temperature. The pressure was kept constant within about ± 0.5 mm Hg (67Pa) by addition of adsorbate vapor controlled by a manostat during the adsorption period, which did not exceed about 8 hours. As adsorbate was adsorbed by the sorbant material, the decrease in pressure caused the monostat to open a valve which admitted more adsorbate vapor to the chamber to

restore the above control pressures. Sorption was complete when the pressure change was not sufficient to activate the monostat. The increase in weight was calculated as the adsorption capacity of the sample in g/100 g of calcined adsorbant.

When Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica alumina cracking catalyst taken as an Alpha of 1 (Rate Constant = 0.16 $sec^{-1}$). The Alpha Test is described in U.S. Patent 3,354,078 and in The Journal of Catalysis, Vol. IV. pp. 522-529 (August 1965). The silicate tested in this Alpha Test must be at least partially, in the hydrogen form. The conversion to the hydrogen form may be accomplished by contact of the silicate with an ammonium salt or acid solution followed by thermal treatment to eliminate ammonia and water from the silicate.

EXAMPLE 1

a) Preparation of DABCO-$C_5$ - diquat dibromide

DABCO, 80g, was dissolved in 100 ml methanol and placed in a 1 liter round-bottom flask equipped with a magnetic stirring bar, reflux condenser, thermometer, and addition funnel. 1,5-Dibromopentane, 82.4g, was added at such a rate to keep the reaction temperature at 50 ± 5° C. After addition, the reaction mixture was stirred at room temperature for 2 hours. Then 300 ml of dry diethyl ether was added to separate the $C_5$-diquat as an oil from the solvents. The lower layer containing the product was separated from the upper layer. The solvent still present in the lower layer was evaporated by heating at 100° C for 18 hours at 100 Torr.

Elemental analysis of the adduct revealed the following:

| | % C | % N | C/N | % H |
|---|---|---|---|---|
| Actual | 43.7 | 11.95 | 4.25 | 7.81 |
| Theoretical* | 43.22 | 11.86 | 4.25 | 7.68 |

*Calculated on assumption that the adduct was a mono-hydrate

b) Preparation of MCM-20

Aluminum nitrate, $Al(NO_3)_3 \cdot 9H_2O$, 0.8 g, was dissolved in 40 g of water. A solution of 10.55 g of DABCO-$C_5$-diquat dibromide in 50 g of water was added, followed by a solution of 4.0 g of potassium hydroxide (86.0% KOH) in 25 g of water. Finally, 24 g of Hi-sil (~87 percent $SiO_2$) was blended into the composite solution. The reaction mixture so prepared was then digested at 160° C in a Teflon(registered trademark)-lined static autoclave for 17.5 days. The final pH was 10.1. The crystalline product was filtered, washed with water until bromide-free and then dried at ambient temperature. It gave an X-ray diffraction pattern whose major lines are listed in Table IV. After a three hour calcination at 538° C, the X-ray diffraction pattern contained the major lines listed in Table V. The sorptive capacities were found to be (g/100 g of calcined solid).

| | |
|---|---|
| Cyclohexane, 200 Torr (26.6 kPa) | 1.5 |
| n-Hexane, 20 Torr (2.7 kPa) | 2.4 |
| Water, 12 Torr (1.6 kPa) | 5.0 |

Chemical composition of the dried sample, wt. percent

| | |
|---|---|
| $SiO_2$ | 73.0 |
| $Al_2O_3$ | 0.92 |
| $K_2O$ | 1.06 |
| N | 2.99 |
| Ash | 76.0 |
| $SiO_2/Al_2O_3$ molar | 135 |

Table IV

| X-Ray Diffraction Pattern of as-synthesized MCM-20 of Example 1. | | |
|---|---|---|
| 2 Theta | d,Å | $I/I_o$ |
| 4.45 | 19.8 | 73 |
| 15.55 | 5.7 | 6 |
| 16.73 | 5.3 | 6 |
| 17.15 | 5.17 | 11 |
| 17.81 | 4.98 | 14 |
| 18.77 | 4.73 | 12 |
| 20.52 | 4.33 | 16 |
| 21.49 | 4.14 | 14 |
| 22.43 | 3.96 | 23 |
| 23.16 | 3.84 | 14 |
| 24.00 | 3.71 | 22 |
| 24.88 | 3.58 | 100 |
| 26.48 | 3.37 | 81 |
| 28.12 | 3.17 | 17 |
| 28.61 | 3.12 | 18 |
| 30.23 | 2.957 | 8 |
| 31.68 | 2.825 | 5 |
| 34.14 | 2.627 | 3 |
| 34.68 | 2.587 | 3 |
| 36.24 | 2.479 | 5 |
| 43.65 | 2.074 | 3 |
| 45.12 | 2.010 | 4 |
| 45.96 | 1.975 | 3 |
| 49.12 | 1.855 | 20 |
| 50.81 | 1.797 | 3 |

Table V

| X-Ray Diffraction Pattern of Calcined MCM-20 of Example 1. | | |
|---|---|---|
| 2 Theta | d, Å | $I/I_o$ |
| 6.77 | 13.1 | 32 |
| 11.96 | 7.40 | 8 |
| 12.92 | 6.85 | 10 |
| 13.68 | 6.47 | 9 |
| 14.65 | 6.05 | 13 |
| 16.81 | 5.28 | 8 |
| 19.55 | 4.54 | 8 |
| 20.63 | 4.31 | 3 |
| 21.73 | 4.09 | 5 |
| 23.06 | 3.86 | 5 |
| 24.19 | 3.68 | 17 |
| 26.08 | 3.42 | 100 |
| 28.39 | 3.14 | 5 |
| 29.52 | 3.03 | 6 |
| 43.95 | 2.060 | 4 |
| 45.02 | 2.014 | 3 |
| 45.715 | 1.985 | 3 |
| 49.078 | 1.856 | 8 |

Five grams of the as-synthesized MCM-20 were calcined for 3 hours at 538° C in flowing nitrogen after being heated slowly to this temperature. After three hours at 538° C, the nitrogen was replaced with air in order to burn off any carbon deposited. The calcined product was exchanged three times with 45 ml of 0.2 N ammonium acetate per gram of solid at 71° C for 2 hours each in a sealed plastic jar. The product was filtered, washed with copious amounts of water and dried at ambient temperature. The dried material contained 0.01 percent of residual potassium. A sample of the ammonium-exchanged product was calcined for 3 hours at 538° C. Examination by X-ray diffraction showed the same pattern as given in Table V. The product contained 1.16 wt. percent $Al_2O_3$ at 98.2 percent ash. It had an $\alpha$ -value of 0.5.

EXAMPLE 2

A reaction mixture identical to that of Example 1(b) was crystallized at 180° C. The product obtained after 163 hours gave essentially the same X-ray Diffraction pattern as that of Table IV.

EXAMPLE 3

The reaction mixture was identical to that of Example 1(b) except that the potassium hydroxide was replaced by 2.5 g of sodium hydroxide (about 98 percent). The crystalline product obtained after 161 hours was identical to that of Example 1, but contained a minor amount of zeolite ZSM-12.

EXAMPLE 4

This example contains no deliberately added aluminum source, although Hi-Sil silica employed contained about 0.5 percent $Al_2O_3$.

A quantity of 10.55 g of DABCO-$C_5$-diquat bromide was dissolved in 65 g of water. A solution of 3.8 g of sodium hydroxide (about 98 percent) in 50 g of water was added, followed by 24 g of Hi-Sil. The well-blended reaction mixture was heated at 160° C in a Teflon-lined autoclave. A crystalline product was isolated after 183 hours digestion at this temperature. The product had the X-ray diffraction pattern of the product of Example and contained additionally a minor amount of ZSM-12. After calcination for 3 hours at 538° C in air, the material had a surface area of 242 $m^2/g$ and the following sorptive capacities, g/100 of solid:

| | |
|---|---|
| Cyclohexane, 20 Torr (26.6 kPa) | 3.2 |
| n-Hexane, 20 Torr (2.7 kPa) | 2.8 |
| Water, 12 Torr (1.6 kPa) | 4.5 |

The chemical composition of the dried sample was

| | (wt. percent) |
|---|---|
| $SiO_2$ (by difference) | 71.8 |
| $Al_2O_3$ | 0.47 |
| $Na_2O$ | 0.59 |
| N | 3.10 |
| Ash | 72.9 |
| $SiO_2/Al_2O_3$, molar | 260 |

The product was precalcined and ion-exchanged as described in Example 1. The dried material contained 0.2 percent residual sodium. The ammonium-exchanged product was calcined for 3 hours at 538° C. The X-ray diffraction pattern of this material was the same as listed in Table V, but also contained a minor amount of ZSM-12. The calcined material contained 0.71 wt. percent of $Al_2O_3$ at 97.4 percent ash.

EXAMPLE 5

a) Preparation of DABCO-$C_4$ - diquat dibromide

1, 4-dibromobutane was used to prepare DABCO-$C_4$-diquat dibromide under substantially similar conditions and proportions as those used above to produce DABCO-$C_5$-diquat dibromide.

Elemental analysis of the adduct revealed the following

| | % C | % N | C/N | % H |
|---|---|---|---|---|
| Actual | 42.8 | 12.46 | 4.01 | 7.07 |
| Theoretical* | 42.77 | 12.47 | 4.00 | 7.18 |

*Calculated on assumption that the adduct was DABCO-$C_4$-diquat • 0.5 $H_2O$

b) Preparation of MCM-20

Aluminum nitrate, $Al(NO_3)_3 \cdot 9H_2O$ g, 0.8 g was dissolved in 40 g of water. Solutions of 10.2 g of DABCO-$C_4$-diquat dibromide in 50 g of water and of 4.95 g of potassium hydroxide (86%) in 25 g of water were added. Finally, 24 g of Hi-Sil, a precipitated silica containing about 87% of $SiO_2$, was blended into the solution. The reaction mixture was heated at 180° C in a teflon(registered trademark)-lined static pressure vessel for 191 hours. The x-ray diffraction pattern of the product is given in Table VI.

Table VI

| X-Ray Diffraction Pattern of the Product of Example I | | |
|---|---|---|
| 2 Theta | d,Å | I/I |
| 4.42 | 20.0 | 37 |
| 17.42 | 5.09 | 10 |
| 18.31 | 4.84 | 7 |
| 18.86 | 4.70 | 8 |
| 19.65 | 4.52 | 7 |
| 22.45 | 3.96 | 10 |
| 23.97 | 3.71 | 23 |
| 25.22 | 3.53 | 100 |
| 26.57 | 3.35 | 41 |
| 27.78 | 3.21 | 36 |
| 28.30 | 3.15 | 25 |
| 30.61 | 2.921 | 6 |
| 36.33 | 2.473 | 4 |
| 49.03 | 1.858 | 32 |
| 50.73 | 1.800 | 8 |

The calcined form of the product of Example 5 gave an x-ray diffraction pattern with the same lines as exhibited by calcined product of Example 1, except for the lower apparent crystallinity, which prevented separation of some of the weak lines. The low-angle peak of these calcined products can vary widely in intensity as a result of delamination and may even be absent in the extreme case.

EXAMPLE 6

Aluminum nitrate, $Al(NO_3)_3 \cdot 9H_2O$, 0.8 g, was dissolved in 40 g of water. Solutions of 10.2 g of DABCO-$C_4$-diquat dibromide in 50 g of water and of 3.1 g of sodium hydroxide (~98%) in 25 g of water were added. Finally, 24 g of Hi-Sil, a precipitated silica containing about 87% $SiO_2$, was blended into the solution. The reaction mixture was then heated at 160°C in a Teflon(registered trademark)-lined static autoclave for 410 hours. The x-ray diffraction pattern of the product was similar to that of Example 5. After a 3-hour calcination at 538 C, the x-ray diffraction pattern was similar to that of the calcined product of Example 1 (Table V), but indicating lower apparent crystallinity. The sorptive capacities were found to be, g/100 g of calcined solid:

| | |
|---|---|
| Cyclohexane, 20 Torr (26.6 kPa) | 2.3 |
| n-Hexane,, 20 Torr (2.7 kPa) | 3.5 |
| Water, 12 Torr (1.6 kPa) | 7.5 |

8 g of the as-synthesized silicate was calcined for 3 hours at 538°C in flowing nitrogen. The nitrogen was then gradually replaced by air, and the calcination was continued until the carbon was burned off, allowing no more than 10°C temperature rise.

The calcined material was ammonium exchanged in the same manner as described in Example 1. The product had the following composition (wt.%):

| | |
|---|---|
| $SiO_2$ | 86.42 |
| $Al_2O_3$ | 1.0 |
| Na | 0.01 |
| N | 0.36 |
| Ash | 87.72 |
| $SiO_2/Al_2O_3$, molar | 147 |

The product was then sized to 14-25 mesh and calcined. It gave an alpha value of 2.6 and a Constraint

Index of 0.9 at 540°C. In agreement with this result, the material showed modest activities for dodecane cracking, aromatization of methyl-cyclohexane, oligomerization of propylene and isomerization of trans-butene and xylene.

EXAMPLE 7

a) Preparation of MCM-20

A layered silicate base material was synthesized by a procedure similar to that reported above. Aluminum nitrate, $Al(NO_3)_3.9H_2O$, 1.6 g. was dissolved in 80 g $H_2O$ and a solution of 21.1 g of DABCO-$C_5$-diquat dibromide in 100 g of water was added, followed by a solution of 7.8 g of potassium hydroxide (87.2% KOH) in 50 g of water. Finally, 48 g of Hi-Sil (is 87% $SiO_2$) was blended into the composite solution. The mixture was digested in a stirred autoclave at 160°C for about three days. The final pH was 12.29. The crystalline product was filtered, washed with water until bromide free and then dried at ambient temperature. It gave an x-ray diffraction pattern whose major lines are similar to that reported in Table I.

The product was analyzed to contain:

| | |
|---|---|
| 8.6% | carbon |
| 2.27% | nitrogen |
| 0.85% | $Al_2O_3$ |
| 70% | Ash |

The balance is mainly $SiO_2$ and some K.

The air calcined sample (1000°F (540°C), 3 hours) had a surface area of 132 m /g and sorptive properties of 4.2% $H_2O$, 2.3% cyclohexane and 2.4% n-hexane.

b) Pillaring of MCM-20

Ten grams of above layered silicate in its "as synthesized", uncalcined form was added to 100 ml of water. Dilute HCl solution (0.1N) was added to get a pH of 2 and the reaction mixture was maintained at this pH by the addition of HCl. After about 24 hours, the mixture was filtered, water-washed and dried. The dry solid was added to a mixture of 20 g. dimethylsulfoxide and 10 g n-octylamine at ambient temperature for 24 hours. The solid gave an x-ray diffraction pattern whose main low angle peak was at 3.5° (2 theta). The solid was then treated with 30 grams of tetraethyl orthosilicate (TEOS) at ambient temperature for about 21 hours. The solid was finally filtered and dried. The dried product had a low-angle line at 3.2° (2 theta). The sample was calcined in air at 538°C (1000°F) for 3 hours. The calcined product also had a low-angle peak at 3.2° indicating a basal spacing of 27.6Å. Its chemical composition was found to be, 87.9% $SiO_2$, 1.1% $Al_2O_3$, 0.29% Na and 93.6% ash. The sample had a surface area of 584 $m^2/g$ and cyclohexane adsorption of 16.3 g/100 g of solid, indicating that it was a porous material capable of adsorbing large size hydrocarbon molecules. The material had an $\alpha$-value of 0.5.

EXAMPLE 8

The same base material of Example 7 (a) was treated with tetraethylorthosilicate (6.67 g/g catalyst) at ambient temperature for 72 hours followed by drying and calcining in air at 538°C (1000°F) for 3 hours. The resultant product had a 116 $m^2/g$ surface area and $H_2O$ adsorption 2.7%, cyclohexane 2.4% and n-hexane 2.2%. The result indicates that simple TEOS treatment did not open the layers of the base material to provide additional porosity.

EXAMPLE 9

The TEOS treated but uncalcined sample from Example 7 (b) was contacted with 0.1 N $Al(NO_3)_3$ solution at 100°C for 4 hours. The exchanged sample was then filtered, washed and calcined in air at 540°C for 3 hours. The sample had an alpha value of 2 under standard test conditions. Re-exchange of the calcined sample with 0.1 N $Al(NO_3)_3$ and re-calcination yielded a product having an $\alpha$-value of 3.

EXAMPLE 10

The TEOS treated but uncalcined sample (2.4 g) from Example 7(b) was treated with a solution of 0.3 g $NaAlO_2$ in 30 ml $H_2O$ at ambient temperature for 4 hours followed by exchange with $NH_4NO_3$ solution to reduce the sodium content to 0.08%. The sample was calcined in air at 540 °C for 3 hours. The alpha value of the sample was tested and found to be 1.2. Exchange of the calcined sample with 0.1 N $Al(NO_3)_3$ and recalcination yielded a product having an $\alpha$-value of 2.

## Claims

**1.** A layered silicate or metallosilicate having an x-ray diffraction pattern with the characteristic lines set forth in Table 1 below:

TABLE 1

| d, Å | I |
|---|---|
| 21.0±4.0 | M - VS |
| 5.14±0.15 | W |
| 4.90±0.15 | W |
| 4.40±0.15 | W |
| 3.96±0.1 | W - M |
| 3.71±0.1 | M |
| 3.55±0.1 | VS |
| 3.36±0.08 | S - VS |
| 3.19±0.08 | W - M |
| 1.85±0.03 | M |

**2.** The silicate or metallosilicate of claim 1 which, in the as-synthesized form, has a formula, expressed in terms of mole ratios of oxides in the anhydrous state, which is (3.5 to 6.0) RO • (0 to 1) $M_{2/m}O$ • $Al_2O_3$ • (100 to 5000) $SiO_2$
wherein R is

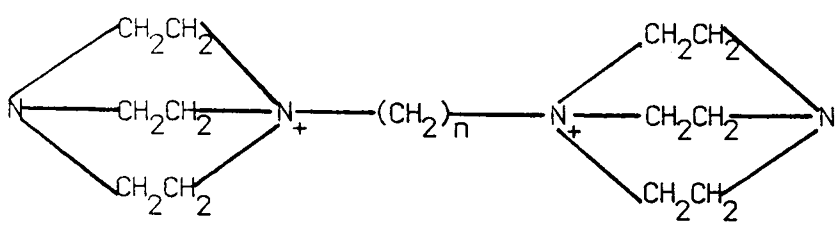

wherein n is 4 or 5; and M is alkali metal cation and m is 1.

**3.** A process of producing the silicate or metallosilicate of Claim 1, comprising crystallizing a reaction mixture containing water, a source of an oxide of silicon, a source of hydroxyl ions, optionally a source of metal oxide and further containing a source of a cation of the formula R wherein R is

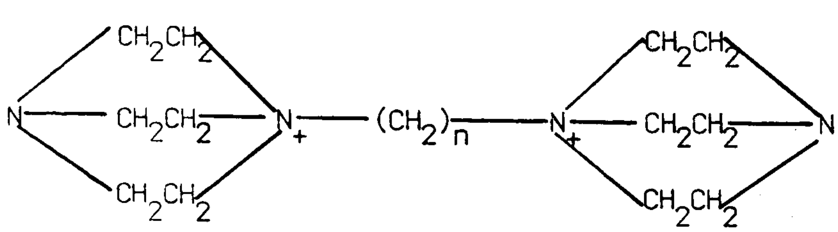

wherein n is 4 or 5, wherein the ranges of mole ratios of components of the reaction mixture are:

| | |
|---|---|
| $SiO_2/Al_2O_3$ | 100 - ∞ |
| $H_2O/(RO + M_2O)$ | 50 - 250 |
| $OH^-/SiO_2$ | 0.05 - 0.50 |
| $RO/(RO + M_2O)$ | 0.30 - 0.90 |

wherein M is an alkali metal.

**4.** A pillared silicate or metallosilicate formed from a layered silicate or metallosilicate which exhibits an X-ray diffraction pattern having the characteristic lines given in Table 1 of the specification; and comprising pillars of at least one oxide of an element from group IB, IIB, IIIA, IIIB, IVA, IVB, VA, VB, VIA, VIIA and VIIIA of the Periodic Table interposed between layers of said layered silicate, to separate and support said layers.

**5.** The pillared silicate or metallosilicate of Claim 5, wherein said element is silicon or aluminum.

**6.** A method for reparing the pillared silicate or metallosilicate composition of Claim 4 comprising
a) providing a layered silicate or metallosilicate which exhibits an X-ray diffraction pattern having the characteristic lines given in Table 1 of the specification; and enhancing the interlayer distance of layers of said layered silicate or metallosilicate by impregnation with an organic compound capable of forming a cationic species;
b) introducing between the layers of said impregnated layered silicate or metallosilicate a compound capable of conversion to said oxide and converting said compound to said oxide.

**7.** The method of Claim 6, wherein said organic compound is an n-alkylamine.

**8.** The method of Claim 6 or Claim 8, wherein said compound capable of conversion is electrically neutral.

**9.** The method of any one of claims 6 to 8 wherein said compound capable of conversion is hydrolyzable and said product is converted by hydrolysis to form said oxide pillars.

**Revendications**

**1.** Un silicate ou métallosilicate en couches dont le spectre de diffraction aux rayons-X présente les raies caractéristiques données dans le tableau 1 ci-dessous:

TABLEAU 1

| d, Å | I |
|---|---|
| 21,0 ± 4,0 | M - VS |
| 5,14 ± 0,15 | W |
| 4,90 ± 0,15 | W |
| 4,40 ± 0,15 | W |
| 3,96 ± 0,1 | W - M |
| 3,71 ± 0,1 | M |
| 3,55 ± 0,1 | VS |
| 3,36 ± 0,08 | S - VS |
| 3,19 ± 0,08 | W - M |
| 1,85 ± 0,03 | M |

**2.** Le silicate ou métallosilicate selon la revendication 1, qui sous sa forme telle qu'obtenue par synthèse, répond à la formule exprimée en termes de rapport molaire d'oxyde à l'état anhydre:

$(3{,}5 \text{ à } 6{,}0)\ RO\ .\ (0 \text{ à } 1)\ M_{2/m}O.Al_2O_3\ .\ (100 \text{ à } 5000)\ SiO_2$

dans laquelle:

R représente:

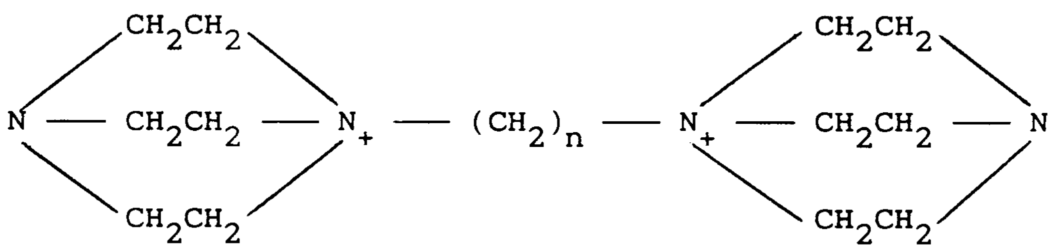

dans laquelle n est égal à 4 ou 5; et
dans laquelle:
M représente un cation de métal alcalin et m est égal à 1.

3. Un procédé de préparation du silicate ou métallosilicate selon la revendication 1, comprenant: la cristallisation d'un mélange réactionnel contenant de l'eau, une source d'un oxyde de silicium, une source d'ion hydroxyle, éventuellement une source d'oxyde métallique et contenant de plus une source d'un cation de formule R:

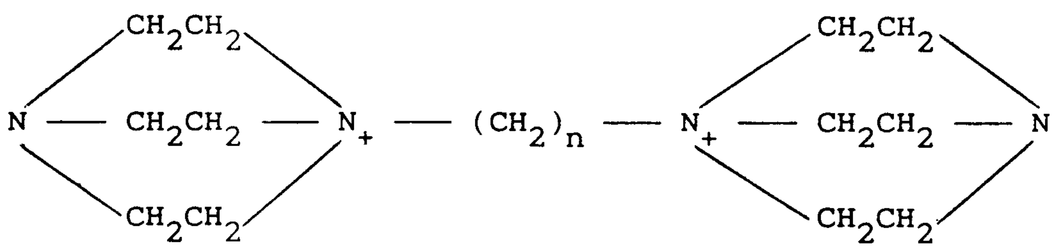

dans laquelle n est égal à 4 ou 5, et dans laquelle les intervalles de rapport molaire des composants du mélange réactionnel sont:

| | |
|---|---|
| . $SiO_2/Al_2O_3$ | 100 - ∞ |
| . $H_2O/(RO + M_2O)$ | 50 - 250 |
| . $OH^-/SiO_2$ | 0,05 - 0,50 |
| . $RO/(RO + M_2O)$ | 0,30 - 0,90 |

dans lesquels M représente un métal alcalin.

4. Un silicate ou métallosilicate empilé formé à partir d'un silicate ou métallosilicate en couches présentant un spectre de diffraction aux rayons-X dont les raies caractéristiques sont énumérées dans le tableau I de la description et comprenant des piliers d'au moins un oxyde d'un élément du groupe IB, IIB, IIIA, IIIB, IVA, IVB, VA, VB, VIA, VIIA et VIIIA de la Classification Périodique des Eléments interposé entre les couches de ce silicate en couches pour séparer et supporter ces couches.

5. Le silicate ou métallosilicate empilé selon la revendication 4, caractérisé en ce que ledit élément est le silicium ou l'aluminium.

6. Un procédé de préparation de la composition de silicate ou de métallosilicate empilé selon la revendication 4, comprenant les étapes suivantes:
a) la préparation d'un silicate ou métallosilicate en couches présentant un spectre de diffraction aux rayons-X dont les raies caractéristiques sont énumérées dans le tableau 1 de la description; l'augmentation de la distance intercouche entre les couches de ce silicate ou métallosilicate en couches par imprégnation à l'aide d'un dérivé organique apte à former une espèce cationique;
b) l'introduction entre les couches de ce silicate ou métallosilicate en couches imprégné d'un dérivé

capable de conversion en ledit oxyde et la conversion de ce dérivé en ledit oxyde.

7. Le procédé selon la revendication 6, caractérisé en ce que ce dérivé organique est une n-alkylamine.

8. Procédé selon la revendication 6 ou 7, caractérisé en ce que ce dérivé capable de conversion est électriquement neutre.

9. Procédé selon l'une quelconque des revendications 6 à 8, caractérisé en ce que ce dérivé apte à une conversion est hydrolysable et en ce que ce produit est converti par hydrolyse pour former lesdits piliers d'oxyde.

**Patentansprüche**

1. Schichtsilicat oder geschichtetes Metallsilicat mit einem Röntgenbeugungsdiagramm mit den nachfolgend in Tabelle 1 aufgeführten kennzeichnenden Linien:

Tabelle 1

| d, Å | I |
|---|---|
| 21,0 ±4,0 | mittel bis sehr stark |
| 5,14±0,15 | schwach |
| 4,90±0,15 | schwach |
| 4,40±0,15 | schwach |
| 3,96±0,1 | schwach bis mittel |
| 3,71±0,1 | mittel |
| 3,55±0,1 | sehr stark |
| 3,36±0,08 | stark bis sehr stark |
| 3,19±0,08 | schwach bis mittel |
| 1,85±0,03 | mittel |

2. Silicat oder Metallsilicat nach Anspruch 1, der in der so synthetisierten Form eine auf die Molverhältnisse der Oxide im wasserfreien Zustand bezogene Formel aufweist, die

$(3,5 \text{ bis } 6,0)\ RO \cdot (0 \text{ bis } 1)\ M_2/m\ O \cdot Al_2O_3 \cdot (100 \text{ bis } 5000)\ SiO_2$

lautet, worin R

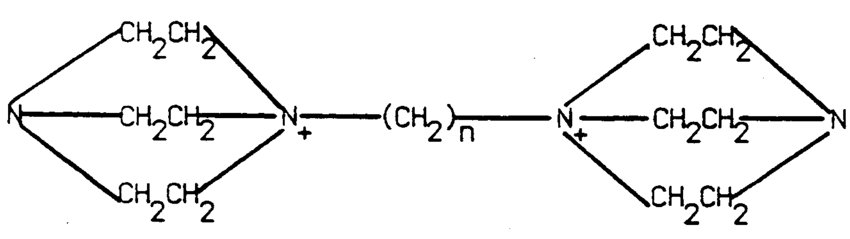

ist,
worin n 4 oder 5 ist und M ein Alkalimetalkation und m 1 ist.

3. Verfahren zur Herstellung des Silicats oder Metallsilicats nach Anspruch 1, das die Kristallisation einer Reaktionsmischung umfaßt, die Wasser, eine Quelle eines Siliciumoxids, eine Quelle von Hydroxylionen, eventuell eine Quelle eines Metalloxids und außerdem eine Quelle eines Kations der Formel R enthält, worin R

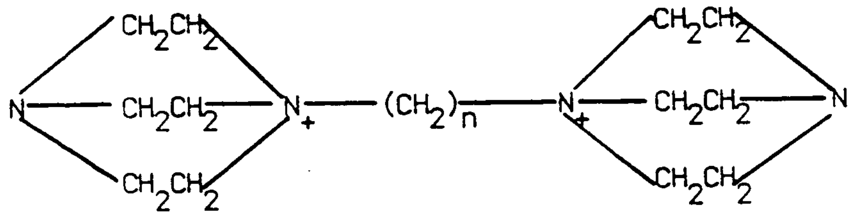

ist,
worin n 4 oder 5 ist, wobei die Bereiche der Molverhältnisse der Komponenten der Reaktionsmischung wie folgt sind:

| | |
|---|---|
| $SiO_2/Al_2O_3$ | 100 - ∞ |
| $H_2O/(RO + M_2O)$ | 50 - 250 |
| $OH^-/SiO_2$ | 0,05 - 0,50 |
| $RO/(RO + M_2O)$ | 0,30 - 0,90 |

worin M ein Alkalimetall ist.

**4.** Gestütztes Silicat oder Metallsilicat, das aus einem Schichtsilicat oder geschichtetem Metallsilicat gebildet wird, das ein Röntgenbeugungsdiagramm aufweist, das die in Tabelle 1 der Beschreibung angegebenen kennzeichnenden Linien aufweist und Stützen von zumindest einem Oxid eines Elementes der Gruppe IB, IIB,IIIA, IIIB, IVA, IVB, VA, VB, VIA, VIIA und VIIIA des Periodensystems umfaßt, die zwischen den Schichten des Schichtsilicats angeordnet sind, um diese Schichten zu trennen und zu halten.

**5.** Gestütztes Silicat oder Metallsilicat nach Anspruch 5, worin das Element Silicium oder Aluminium ist.

**6.** Verfahren zur Herstellung einer gestützten Silicat-oder Metallsilicatzusammensetzung nach Anspruch 4, welches umfaßt:

a) Bereitstellung eines Schichtsilicats oder eines geschichteten Metallsilicats, das ein Röntgenbeugungsdiagramm mit den in Tabelle 1 der Beschreibung angegebenen kennzeichnenden Linien aufweist, und Vergrößerung des Zwischenschichtabstandes der Schichten des Schichtsilicats oder des geschichteten Metallsilicats durch Imprägnierung mit einer organischen Verbindung, die kationische Arten bilden kann,

b) Einführung einer Verbindung zwischen die Schichten des imprägnierten Schichtsilicats oder geschichteten Metallsilicats, die zur Umwandlung in das Oxid in der Lage ist und die Verbindung in das Oxid umwandelt.

**7.** Verfahren nach Anspruch 6, worin die organische Verbindung n-Alkylamin ist.

**8.** Verfahren nach Anspruch 6 oder 7, worin die Verbindung, die zur Umwandlung in der Lage ist, elektrisch neutral ist.

**9.** Verfahren nach einem der Ansprüche 6 bis 8, worin die Verbindung, die zur Umwandlung in der Lage ist, hydrolisierbar ist und das Produkt durch Hydrolyse umgewandelt wird, um die Oxidstützen zu bilden.